# EUROPÄISCHE PATENTSCHRIFT

(11) **EP 0 947 270 B1**
(45) Veröffentlichungstag und Bekanntmachung des Hinweises auf die Patenterteilung: **29.05.2002**
(21) Anmeldenummer: 99810258.6
(22) Anmeldetag: 23.03.1999
(51) Int. Cl.: B23B 45/00, B23Q 11/10

(54) **Gerät mit Kühlvorrichtung**
Apparatus with cooling device
Dispositif avec moyens de refroidissement

(30) Priorität: 01.04.1998 DE 19814470
(43) Veröffentlichungstag der Anmeldung: 06.10.1999
(73) Patentinhaber: HILTI Aktiengesellschaft, 9494 Schaan (LI)
(72) Erfinder: Daubinger, Gerd, 80935 München (DE); Ferlemann, Felix, 86949 Windach (DE); Rahmsdorf, Horst, 81375 München (DE); Brandenburg, Frank, 52062 Aachen (DE); Wirtz, Holger, 52074 Aachen (DE)
(74) Vertreter: Wildi, Roland

(56) Entgegenhaltungen:
- US-A- 2 381 650
- US-A- 2 437 605
- US-A- 4 708 539

## Beschreibung

Die Erfindung betrifft ein Gerät zur Erzeugung einer Drehbewegung die auf Bohrwerkzeuge oder Befestigungselemente einwirkt, gemäss dem Oberbegriff des Patentanspruchs 1 (siehe US-A-243 76 05).

Für die Festlegung eines beispielsweise aus einem dünnwandigen Metall gebildeten Bauteiles an einem Untergrund der beispielsweise aus Holz besteht, wird im Bauteil eine Durchtrittsöffnung benötigt, die ein Befestigungselement zum Teil durchdringen kann, bevor es an dem Untergrund festlegbar ist. Diese Durchtrittsöffnung ist beispielsweise mit dem Bohrkopf eines Bohrwerkzeuges oder eines Befestigungselementes herstellbar, wobei die Drehbewegung des Bohrwerkzeuges oder des Befestigungselementes von einem Gerät erzeugt wird.

Um die Herstellung einer Durchtritts- oder Aufnahmeöffnung im Bauteil in einer sehr kurzen Zeit bewältigen zu können und bei der Herstellung nur eine geringe Anpresskraft auf das Gerät aufbringen zu müssen, wurden in der Vergangenheit Versuche unternommen, bei denen das Bohrwerkzeug oder das Befestigungselement mit einer sehr hohen Drehzahl angetrieben wurde. Diese hohe Drehzahl brachte einen starken Anstieg der Temperatur an dem Bauteil im Bereich der Bearbeitungsstelle mit sich und führte bei verschiedenen Bauteilen dazu, dass das Material im Bereich der Bearbeitungsstelle zähe Eigenschaften entwickelte, so dass eine spanabhebende Bearbeitung mit dem Bohrkopf des Bohrwerkzeugs oder des Befestigungselementes nicht mehr stattfinden konnte. Stattdessen stellte sich zwischen dem Bohrkopf des Bohrwerkzeuges oder des Befestigungselementes eine sehr starke Reibung ein, die zu einem Ausglühen des Bohrkopfes und somit zu einer Beschädigung des Bohrwerkzeuges oder des Befestigungselementes führte.

Aus der US-A-2437605 ist eine Kühlmittel-Zuführeinrichtung für ein Bohrgerät bekannt, die einen Vorratsbehälter zur Bevorratung von Kühlmittel, mit einem in dem Vorratsbehälter angeordneten Druckolben aufweist. Der von der Oberseite des Vorratsbehälters abragende Druckkolben weist einen freien Endbereich auf, den ein an der Unterseite geschlossener Zylinder umgibt. Dieser Zylinder ist mechanisch mit einem Handrad verbunden und wird jedesmal gegen die Kraft einer Druckfeder zur Oberseite des Vorratsbehälters bewegt, wenn das mit einer Bohrspindel in Verbindung stehende Handrad bei einem Bohrvorgang betätigt wird. Der sich dabei im Vorratsbehälter aufbauende Überdruck dient dazu, das Kühlmittel über eine mit dem Innenraum des Vorratsbehälter in Verbindung stehende Versorgungsleitung dem Bohrwerkzeug zuzuführen.

Der Erfindung liegt die Aufgabe zugrunde, ein Gerät zur Erzeugung einer auf Bohrwerkzeuge oder Befestigungselemente einwirkenden Drehbewegung zu schaffen, mit dem Beschädigungen der Bohrwerkzeug oder Befestigungselemente, insbesondere durch Ausglühen bei der Herstellung von Durchtritts- oder Aufnahmeöffnungen in einem Bauteil vermieden werden.

Die Lösung dieser Aufgabe erfolgt durch ein Gerät zur Erzeugung einer auf Bohrwerkzeuge oder Befestigungselemente mit Bohrspitze einwirkenden Drehbewegung, welches die im Patentanspruch 1 angeführten Merkmale aufweist.

Mit Hilfe des zugeführten Kühlmittels wird der bei der Herstellung der Durchtritts- oder Aufnahmeöffnung in dem Bauteil sich stark erwärmende Bohrkopf des Bohrwerkzeuges oder des Befestigungselementes gekühlt, so dass trotz der hohen Reibung zwischen dem Bohrwerkzeug oder dem Befestigungselement und dem Bauteil ein Ausglühen des Bohrkopfes verhindert wird. Das dem Bohrwerkzeug oder Befestigungselement zugeführte Kühlmittel kühlt zudem die Oberfläche des Bauteiles im Bereich der Bearbeitungsstelle, so dass die ursprünglichen Eigenschaften des Materials erhalten bleiben und eine spanabhebende Bearbeitung für die gesamte Herstellungsdauer der Durchtritts- oder Aufnahmeöffnung möglich ist. Aufgrund der Verwendung des Kühlmittels kann das Bohrwerkzeug oder das Befestigungselement mit einer hohen Drehzahl angetrieben werden. Für die Herstellung der Durchtritts- oder Aufnahmeöffnung wird dadurch nur eine geringe Zeit und eine geringe Anpresskraft benötigt.

Damit die Zufuhr von Kühlmittel einfach und sicher aktiviert bzw. unterbrochen werden kann, ist ein Ventil vorgesehen, mit dem die Grösse der lichten Weite einer Auslassöffnung der Vorrichtung steuerbar ist.

Das Ventil wirkt mit einer Steuereinrichtung zusammen, damit eine manuelle Betätigung des Ventils während der Herstellung der Durchtritts- oder Aufnahmeöffnung in dem Bauteil entfallen kann. Bei der Steuereinrichtung handelt es sich beispielsweise um eine elektrische oder elektromagnetische Stelleinrichtung, deren Stromzufuhr beispielsweise mittels eines Betätigungsschalters des Gerätes erfolgt. Der Beginn, die Dauer und das Ende der Zufuhr von Kühlmittel erfolgt beispielsweise mittels elektrischer Regelelemente.

Um eine Steuerung des Ventils in Abhängigkeit der Bewegung des Gerätes in Bearbeitungsrichtung erreichen zu können ist vorzugsweise die Steuereinrichtung von einem gegenüber einem Gehäuse des Gerätes entgegen der Bearbeitungsrichtung gegen die Kraft eines Federelementes versetzbaren Bauelement gebildet, das eine in Bearbeitungsrichtung weisende Anschlagfläche und eine mit dem Ventil zusammenwirkende Steuerkontur aufweist.

Eine exakte Steuerung der Grösse der lichten Weite der Auslassöffnung erfolgt vorteilhafterweise mit einem Stellelement des Ventils, das von der Steuerkontur bezogen auf die Bearbeitungsrichtung unter einem Winkel von 0° bis 90° versetzbar ist.

Aus herstelltechnischen Gründen bilden vorzugsweise die Kühlmittel bevorratende Vorrichtung und das Ventil eine Baueinheit.

Bei dem in der Vorrichtung bevorrateten Kühlmittel handelt es sich um ein Medium, das bei atmosphärischem Druck gasförmig ist. Das Einbringen des Kühlmittels in die Vorrichtung erfolgt unter einem hohem Druck, bei dem sich der Aggregatzustand des Kühlmittels von gasförmig auf flüssig ändert. Aus sicherheitstechnischen Gründen ist vorzugsweise die Vorrichtung als Druckbehälter ausgebildet.

Damit ein schnelles Austauschen einer leeren gegen eine volle Kühlmittel bevorratende Vorrichtung möglich ist, steht zweckmässigerweise die Vorrichtung lösbar mit einem Gehäuse des Gerätes in Verbindung.

Aus handhabungstechnischen Gründen ist zweckmässigerweise die Zuführeinrichtung von einer biegbaren Rohrleitung gebildet.

Die Bohrwerkzeuge können insbesondere mit wärmeempfindlichen Schneidwerkstoffen wie beispielsweise Diamanten, versehen sein.

Die Erfindung wird anhand einer Zeichnung, die ein Ausführungsbeispiel wiedergibt, näher erläutert.

Bei dem dargestellten Gerät handelt es sich beispielsweise um ein Schraubgerät, mit dem eine Drehbewegung erzeugt werden kann, die auf ein Befestigungselement 2 mit einem Bohrkopf in Form einer Selbstbohrschraube einwirkt. Das Schraubgerät weist ein Gehäuse 1, einen Handgriff 11, einen Betätigungsschalter 12, ein elektrisches Anschlusskabel 13, eine gegenüber dem Gehäuse 1 in eine Drehbewegung versetzbare Spindel 14 und eine mit dem Gehäuse 1 fest verbundene Führungseinrichtung 15 auf.

Das bearbeitungsseitige Ende der Spindel 14 steht mit dem Befestigungselement 2 in Verbindung, das seinerseits mit seinem Bohrkopf auf der Oberfläche eines Bauteiles 3 aus dünnwandigem Metall aufliegt. Entgegen der Bearbeitungsrichtung schliesst sich an den Bohrkopf ein Abschnitt mit einem Aussengewinde an, der an einem grossflächigen Kopf endet. Der Bohrkopf und der Abschnitt mit dem Aussengewinde bilden zusammen das Schaftteil des Befestigungselementes 2. Das Bauteil 3 liegt auf einem beispielsweise aus Holz bestehenden Untergrund 8 auf und ist an diesem mit dem Befestigungselement 2 festlegbar.

Die mit dem Gehäuse 1 des Schraubgerätes verbundene Führungseinrichtung 15 dient der Aufnahme eines Trägerelementes 5, in dem eine Vorrichtung 6 in Form eines Druckbehälters zur Bevorratung von Kühlmittel festgelegt ist. Das Trägerelement 5 ist entgegen der Bearbeitungsrichtung gegen die Kraft einer Feder 52 um einen Weg versetzbar, der im wesentlichen der Länge des Schaftteiles des Befestigungselementes 2 entspricht. Die Feder 52 wirkt mit einem ersten Mitnehmer 16 der Führungseinrichtung 15 und mit einem zweiten Mitnehmer 51 des Trägerelementes 5 zusammen.

Die Vorrichtung 6 zur Bevorratung des Kühlmittels überragt mit einem Ventil 61 bearbeitungsseitig das Trägerelement 5. Das Stellelement 62 des Ventils 61 ist von einem Druckkörper 43 abgedeckt, der gegenüber einer ersten Stellschraube 44 drehbar angeordnet ist und eine entgegen der Bearbeitungsrichtung weisende Steuerkontur 42 aufweist. Diese erste Stellschraube 44 erstreckt sich durch eine Öffnung in einem Verbindungsstück 45 in Form eines Joches und weist an einem bearbeitungsseitigen Ende einen Kopf auf, an dem ein dem Verdrehen der ersten Stellschraube 44 dienendes Werkzeug formschlüssig angreifen kann.

Das Verbindungsstück 45 weist eine weitere Öffnung auf, die von einer zweiten Stellschraube 46 durchsetzt wird. Bearbeitungsseitig weist auch diese zweite Stellschraube 46 einen Kopf auf, der eine bearbeitungsseitige Anschlagfläche 41 und eine schräg verlaufende Durchgangsöffnung aufweist, die der Aufnahme eines Teiles einer Zuführeinrichtung 7 dient, die mit dem Ventil 61 zusammenwirkt.

Mittels einer Klemmschraube 48 ist die Zuführeinrichtung 7 in der Durchgangsöffnung festlegbar. Die Zuführeinrichtung 7 ist in Form einer dünnen, teilweise biegbaren Rohrleitung ausgebildet. Beide Öffnungen in dem Verbindungsstück 45, die von der ersten Stellschraube 44 und der zweiten Stellschraube 46 durchsetzt werden, weisen ein nicht dargestelltes Innengewinde auf, die auf die jeweiligen Aussengewinde der Stellschrauben 44, 46 abgestimmt sind. Mit Hilfe von auf den Stellschrauben 44, 46 aufgebrachten Sicherungsmuttern, lassen sich die Stellschrauben 44, 46 gegenüber dem Verbindungsstück 45 durch ein Verspannen der Gewindeverbindungen festlegen. Der Druckkörper 43, die erste und zweite Stellschraube 44, 46 sowie das Verbindungsstück 45 bilden ein Bauelement 4, das als Baueinheit vormontierbar ist.

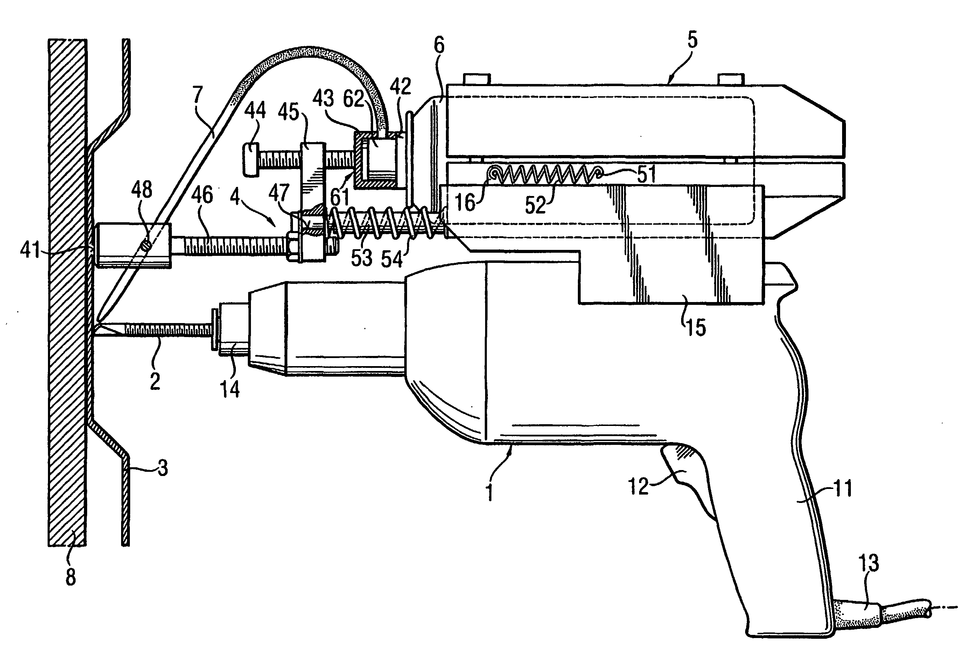

Das Verbindungsstück 45 weist neben den beiden Öffnungen für die Stellschrauben 44, 46 noch zwei weitere Durchtrittsöffnungen 47 auf, von denen in der Zeichnung nur eine sichtbar ist. Eine zweite Durchtrittsöffnung 47 befindet sich genau hinter der dargestellten Durchtrittsöffnung 47. Diese Durchtrittsöffnungen 47 werden von jeweils einem ersten Abschnitt eines bolzenförmigen Steuerelementes 53 durchsetzt, dessen Durchmesser im wesentlichen dem Durchmesser der Durchtrittsöffnungen 47 entspricht. Entgegen der Bearbeitungsrichtung schliesst sich an diesen ersten Abschnitt des Steuerelementes 53 ein zweiter Abschnitt an, dessen Durchmessser grösser ist als der Durchmesser des ersten Abschnittes. Die parallel zur Bearbeitungsrichtung gemessene Länge des ersten Abschnittes übersteigt die sich parallel zur Bearbeitungsrichtung erstreckende Breite des Verbindungsstückes 45 um den Betätigungsweg des Stellelementes 62 des Ventils 61. Das Steuerelement 53 ist fest mit dem Trägerelement 5 verbunden und wird von einem Federelement 54 umgeben, die sich an einer entgegen der Bearbeitungsrichtung weisenden Stirnfläche des Verbindungsstückes und dem Trägerelement 5 abstützt.

Im folgenden wird der Eintreibvorgang des Befestigungselementes beschrieben.

Die in der Zeichnung dargestellte Ausgangstellung des Schraubgerätes zeigt, dass die Bohrspitze des Bohrkopfes und die Anschlagfläche 41 der zweiten Stellschraube 46 auf der Oberfläche des Bauteiles 3 aufliegen.

Bei der darauffolgenden Herstellung der Durchtrittsöffnung in dem Bauteil 3 wird das Befestigungselement 2 in eine Drehbewegung versetzt, so dass dessen Bohrkopf an dem Bauteil 3 eine spanabhebende Bearbeitung durchführt. Dabei dringt das Befestigungselement 2 in das Bauteil 3 ein. Gleichzeitig verschiebt sich das Bauelement 4 gegen die Kraft des Federelementes 54 entgegen der Bearbeitungsrichtung um den Betätigungsweg des Stellelementes 62 des Ventils 61. Dadurch wird die Zufuhr von Kühlmittel aus der Vorrichtung 6 zur Bevorratung von Kühlmittel zum bearbeitungsseitigen Endbereich des Befestigungselementes 2 durch die Zuführeinrichtung 7 hindurch aktiviert. Als Folge davon wird der Bohrkopf des Befestigungselementes 2 und die Oberfläche des Bauteiles 3 im Bereich der Bearbeitungsstelle gekühlt, so dass der Bohrkopf nicht ausglühen und das Material des Bauteiles 3 seine Festigkeitseigenschaften nicht verändern kann.

Nach der Herstellung der Durchtrittsöffnung im Bauteil 3 gelangt das Befestigungselement 2 zu dem beispielsweise aus Holz gebildeten Untergrund 8 und wird in diesem durch Eindrehen festgelegt. Der Untergrund kann beispielsweise auch aus Stahl gebildet sein. Damit allerdings die nur um den Betätigungsweg des Stellelementes 62 des Ventils 61 versetzbaren Stellschrauben 44, 46 diesem weiteren Eintreibvorgang nicht entgegenwirken, ist die Kühlmittel bevorratende Vorrichtung 6 gegenüber der Führungseinrichtung 15 entgegen der Bearbeitungsrichtung und gegen die Kraft einer Feder 52 versetzbar. Dadurch dass die zweite Stellschraube 46 mit ihrer Anschlagfläche 41 während des gesamten Eintreibvorganges auf dem Bauteil 3 aufliegt, ändert sich auch die Lage einer Austrittsöffnung der Zuführeinrichtung 7 nicht. Das über die Zuführeinrichtung 7 zugeführte Kühlmittel kühlt deshalb auch den mit dem Aussengewinde versehenen Abschnitt des Befestigungselementes 2, bevor dieser in das Bauteil 3 eindringt.

Über die Stellschrauben 44, 46 lässt sich jener Zeitpunkt steuern, bei dem das Ventil 61 aktiviert wird. Beispielsweise kann die Anschlagfläche 41 der zweiten Stellschraube 46, das bearbeitungsseitige Ende des Bohrkopfes des Befestigungselementes 2 in der Ausgangsstellung des Schraubgerätes überragen, so dass schon beim Ansetzen des Schraubgerätes an das Bauteil 3 das Ventil 61 aktiviert wird und die Kühlung des Bohrkopfes einsetzt, bevor eine Drehbewegung auf das Befestigungselement 2 ausgeübt wird. Die Anschlagfläche 41 der zweiten Stellschraube 46 kann aber auch gegenüber dem bearbeitungsseitigen Ende des Bohrkopfes entgegen der Bearbeitungsrichtung zurückversetzt angeordnet sein, so dass die Zufuhr von Kühlmittel zeitverzögert zum Einsetzen einer auf das Befestigungselement einwirkenden Drehbewegung erfolgt.

Es ist auch denkbar, dass durch geeignete konstruktive Massnahmen das Ventil 61 nur für die Dauer der Herstellung der Durchtrittsöffnung mit dem Bohrkopf des Befestigungselementes 2 aktivierbar ist.

Bei dem in der Vorrichtung 6 bevorrateten FCKW-freien Kühlmittel handelt es sich beispielsweise aus unter Druck verflüssigten organischen Kohlenwasserstoffen, teilhalogenisierten Kohlenwasserstoffen oder anorganischen Kohlenwasserstoffen wie beispielsweise CO₂ oder N₂O. Die Kühlung des Bohrwerkzeuges, des Befestigungselementes und der Oberfläche des Bauteiles 3 erfolgt durch die latente Wärme einer Phasenumwandlung beispielsweise durch Verdampfungswärme.

## Patentansprüche

1. Gerät zur Erzeugung einer Drehbewegung die auf Bohrwerkzeuge oder Befestigungselemente (2) einwirkt, die mit jeweils einem Bohrkopf versehen sind, mit einer Vorrichtung (6) zur Bevorratung von Kühlmittel, das dem bearbeitungsseitigen Endbereich des Bohrwerkzeugs oder Befestigungselementes (2) wenigstens zeitweise mittels einer Zuführeinrichtung (7) zugeführt wird und einem, mit einer Steuereinrichtung zusammenwirkenden Ventil (61), mit dem die Grösse der lichten Weite einer Auslassöffnung der Vorrichtung (6) steuerbar ist, **dadurch gekennzeichnet, dass** die Steuereinrichtung von einem gegenüber einem Gehäuse (1) des Gerätes entgegen der Bearbeitungsrichtung gegen die Kraft eines Federelemente (54) versetzbaren Bauelement (4) gebildet ist, das eine in Bearbeitungsrichtung weisende Anschlagfläche (41) und eine mit dem Ventil (61) zusammenwirkende Steuerkontur (42) aufweist.

2. Gerät nach Anspruch 1, **dadurch gekennzeichnet, dass** die Steuerung der lichten Weite der Auslassöffnung der Vorrichtung (61) mit einem Stellelement (62) des Ventils (61) erfolgt, das von der Steuerkontur (42) bezogen auf die Bearbeitungsrichtung unter einem Winkel von 0° bis 90° versetzbar ist.

3. Gerät nach Anspruch 1 oder 2, **dadurch gekennzeichnet, dass** die Vorrichtung (6) und das Ventil (61) eine Baueinheit bilden.

4. Gerät nach einem der Ansprüche 1 bis 3, **dadurch gekennzeichnet, dass** die Vorrichtung (6) als Druckbehälter ausgebildet ist.

5. Gerät nach einem der Ansprüche 1 bis 4, **dadurch gekennzeichnet, dass** die Vorrichtung lösbar mit einem Gehäuse (1) des Gerätes in Verbindung steht

6. Gerät nach einem der Ansprüche 1 bis 5, **dadurch gekennzeichnet, dass** die Zuführeinrichtung (7) wenigstens teilweise von einer biegbaren Rohrleitung gebildet ist.

## Claims

1. An appliance for producing a rotary movement which acts on drilling tools or fixing elements (2) which are each provided with a drilling head, having a device (6) for supplying a coolant which is fed at least intermittently by means of a feeder device (7) to the machining-side end region of the drilling tool or fixing element (2), and having a valve (61) which cooperates with a controller and with which the size of the clear width of an outlet opening of the device (6) can be controlled, **characterised in that** the controller is formed by a structural element which can be displaced opposite to the direction of machining against the force of a spring element (54) and which comprises a stop face (41) facing the direction of machining and a control contour (42) which cooperates with the valve (61).

2. An appliance according to claim 1, **characterised in that** the clear width of the outlet opening of the device (6) is controlled by an actuating element (62) of the valve (61) which can be displaced by the control contour (42) at an angle from 0° to 90° with respect to the direction of machining.

3. An appliance according to claim 1, **characterised in that** the device (6) and the valve (61) form a modular unit.

4. An appliance according to any one of claims 1 to 3, **characterised in that** the device (6) is constructed as a pressure vessel.

5. An appliance according to any one of claims 1 to 4, **characterised in that** the device is removably attached to a housing (1) of the appliance.

6. An appliance according to any one of claims 1 to 5, **characterised in that** the feeder device (7) is formed, at least in part, by a flexible tube.

## Revendications

1. Outil pour produire un mouvement de rotation qui agit sur des outils de forage ou des éléments de fixation (2) qui sont munis chacun d'une tête de forage, comprenant un dispositif (6) pour stocker de l'agent de refroidissement qui, au moyen d'un système d'amenée (7), est amené, au moins par intermittence, à la zone extrême côté travail de l'outil de forage ou de l'élément de fixation (2), et comprenant une soupape (61) qui coopère avec un dispositif de commande et qui permet de moduler la dimension du diamètre intérieur de l'orifice de sortie du dispositif (6), **caractérisé en ce que** le dispositif de commande est formé par un élément structurel (4) qui est déplaçable par rapport au carter (1) de l'outil à l'opposé de la direction de travail à l'encontre de la force d'un élément élastique (54) et qui comporte une surface de butée (41) tournée dans la direction de travail et un profil de commande (42) coopérant avec la soupape (61).

2. Outil selon la revendication 1, **caractérisé en ce que** la commande du diamètre intérieur de l'orifice de sortie du dispositif (61) s'effectue à l'aide d'un élément de réglage (62) de la soupape (61), lequel peut être déplacé par le profil de commande (42) selon un angle de 0° à 90° par rapport à la direction de travail.

3. Outil selon la revendication 1 ou 2, **caractérisé en ce que** le dispositif (6) et la soupape (61) forment un ensemble structurel.

4. Outil selon une des revendications 1 à 3, **caractérisé en ce que** le dispositif (6) est conçu sous la forme d'un réservoir sous pression.

5. Outil selon une des revendications 1 à 4, **caractérisé en ce que** le dispositif est relié de manière détachable à un carter (1) de l'outil.

6. Outil selon une des revendications 1 à 5, **caractérisé en ce que** le système d'amenée (7) est formé au moins en partie par une conduite tubulaire flexible.
